(19) Europäisches Patentamt
European Patent Office
Office européen des brevets

(11) Veröffentlichungsnummer: **0 150 011 B1**

(12) **EUROPÄISCHE PATENTSCHRIFT**

(45) Veröffentlichungstag der Patentschrift: **30.10.91**

(51) Int. Cl.[5]: **C07C 231/02**, B01J 31/14

(21) Anmeldenummer: **85100138.8**

(22) Anmeldetag: **08.01.85**

# (54) Katalytisches Verfahren zur Herstellung von Amiden.

(30) Priorität: **20.01.84 DE 3401820**

(43) Veröffentlichungstag der Anmeldung:
**31.07.85 Patentblatt 85/31**

(45) Bekanntmachung des Hinweises auf die Patenterteilung:
**30.10.91 Patentblatt 91/44**

(84) Benannte Vertragsstaaten:
**AT BE CH DE FR GB IT LI LU NL SE**

(56) Entgegenhaltungen:
**DD-A- 207 198**
**GB-A- 779 213**
**US-A- 3 763 234**

**PATENT ABSTRACTS OF JAPAN, Band 7, Nr. 131 (C-169)[1276], 8. Juni 1983; & JP - A - 58 43967 (NIPPON SEKIYU) 14.03.1983**

(73) Patentinhaber: **KLÜBER LUBRICATION MÜNCHEN KG**
**Geisenhausenerstrasse 7**
**W-8000 München 70(DE)**

(72) Erfinder: **Schuster, Dietrich, Dr.**
**Am Käfernberg 7**
**W-6741 Frankweiler / Pfalz(DE)**

(74) Vertreter: **Ratzel, Gerhard, Dr.**
**Seckenheimer Strasse 36a**
**W-6800 Mannheim 1(DE)**

**EP 0 150 011 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein katalytisches Verfahren zur Herstellung von Amiden unter Verwendung an sich bekannter Ausgangssubstanzen.

Die Umsetzung von Säuren oder Säurederivaten mit Aminen oder Aminderivaten zu Amiden ist bekannt.

Der Acylierung von Aminen zu Amiden kommt in der gesamten Chemie eine grundlegende Bedeutung zu, weil die Amide sowohl in der präparativen als auch technischen Chemie eine sehr bedeutende Rolle als Zwischen- und Endprodukte spielen.

Für diese Umsetzung bildet die Gleichung (1) die theoretische Grundlage (vergleiche auch Houben-Weyl Band XI/2, Seite 3 ff),

(1)

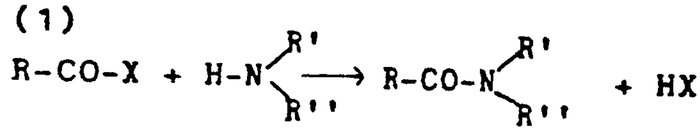

wobei X = -OH, -Cl, $-N_3$, -O-Acyl, -O-Alkyl, -O-Aryl, $-NH_2$ sein kann.

Die einfachste dieser Reaktionen, nämlich die Umsetzung der einfachen Säure mit dem betreffenden Amin, wobei neben dem erstrebten Amid nur Wasser als Reaktionsprodukt gebildet wird, kann allerdings nur in sehr seltenen Fällen technisch realisiert werden, weil diesem direkten Weg durch die Stereochemie bedingte Hindernisse entgegenstehen und hohe negative Bildungswärmen lange Reaktionszeiten bedingen. Dies führt häufig zu einer Fülle unerwünschter Nebenreaktionen, vor allen Dingen dann, wenn die Amine und Säuren noch andere reaktive Gruppen tragen.

Die Verfahren des Standes der Technik umfassen mehrere Stufen, liefern zahlreiche Nebenprodukte und benötigen Ausgangs- und Zwischenprodukte, die in langwierigen und umweltbelastenden Verfahren hergestellt werden.

Demgegenüber liegt vorliegender Erfindung die Aufgabe zugrunde, ein schnell ablaufendes, und einfacheres Verfahren zur Herstellung von Amiden zu schaffen, das insbesondere auch für solche Ausgangsprodukte geeignet ist, die sonst nur mit vielen Zwischenstufen und vielen die Umwelt belastenden Nebenprodukten erzeugt werden können und damit auch energiemäßig günstiger und wirtschaftlich effektiver arbeiten.

Diese Aufgabe wird erfindungsgemäß bei dem Verfahren der eingangs genannten Gattung dadurch gelöst, daß Borsäureester als Reaktionsmedium und/daß Borsäureester als Reaktionsmedium und / oder als Energieüberträger und als Katalysator dient und daß

a) das katalytisch wirkende und als thermischer Energieüberträger dienende Reaktionsmedium ein Borsäureester ist, der bei einer Temperatur von mindestens 150° C thermostabil ist,

b) dieser Borsäureester für sich allein vor dem Einbringen der Reaktionspartner für die Amidbildung auf ein höheres thermisches Energieniveau gebracht wird als die Reaktionspartner für die Amidbildung, wobei das thermische Energieniveau des Borsäureesters mindestens 200° C beträgt, und wobei der Borsäureester für sich allein vor dem Einbringen der Reaktionspartner für die Amidbildung auf ein um 100° C höheres thermisches Energieniveau gebracht wird als die Reaktionspartner für die Amidbildung, und

c) nach der katalytischen Reaktion das Reaktionsprodukt schnell von dem hohen thermischen Energieniveau auf ein tiefer liegendes Niveau gebracht wird.

Nach einer bevorzugten Ausführungsform wird ein solcher Borsäureester eingesetzt, der bei einer Temperatur von mindestens 190° C thermostabil ist.

Eine weitere bevorzugte Ausführungsform ist dadurch gekennzeichnet, daß nach der katalytischen Reaktion das Reaktionsprodukt schnell von dem hohen thermischen Energieniveau auf ein um 20° C tiefer liegendes Niveau gebracht wird.

Bevorzugterweise kann ferner in der Weise gearbeitet werden, daß die Reaktionspartner der Stufe b) für die Amidbildung Säuren oder Säurederivate und primäre oder sekundäre Amine oder Aminderivate sind.

Eine weitere bevorzugte Ausführungsform ist dadurch gekennzeichnet, daß die Reaktionspartner der Stufe b) gemeinsam oder getrennt in beliebiger Reihenfolge und/oder portionsweise alternierend zum Reaktionsmedium zugegeben werden.

Bevorzugterweise können die Reaktionspartner der Stufe b) vor der Zugabe zum Reaktionsmedium vorerwärmt werden.

Eine weitere bevorzugte Ausführungsform ist schließlich dadurch gekennzeichnet, daß die Reaktionspartner der Stufe b) im stöchiometrischen Überschuß einer der verwendeten Komponenten eingesetzt werden.

Das erfindungsgemäße Verfahren bietet die besonderen Vorteile enorm kurzer Reaktionszeiten (teilweise nur wenige Minuten) geringer Nebenreaktionen und geringeren Anteilen von Nebenprodukten und kann in einer besonderen Ausführungsform so gestaltet werden, daß der als Reaktionsmedium dienende Borsäureester, nach der Abtrennung der Amide rezyklisiert und wieder verwendet werden kann.

Von besonderem Vorteil ist auch, daß solche Reaktionspartner die besonders temperaturempfindlich sind trotzdem für diesen Prozeß eingesetzt werden können,weil die Reaktionszeiten außerordentlich kurz sind.

Nach den allgemeinen Grundsätzen der chemischen Reaktionsgleichgewichte muß natürlich nach der Bildung der Amide dafür gesorgt werden, daß die Reaktionsprodukte möglichst schnell entweder gemeinsam mit dem Reaktionsmedium oder auch getrennt von diesen aus dem hohen thermischen Energieniveau abgeführt werden.

Dies erreicht man beispielsweise damit, daß man das Reaktionsgemisch (gemeinsam) über einen Kühler in ein anderes Gefäß überführt, oder dadurch (getrennt), daß man ein kaltes inertes Lösungsmittel,in dem sich die Amide lösen, nicht aber der Borsäureester, hinzufügt und dann die Lösungen in der bekannten Weise trennt.

Das Verfahren der vorliegenden Anmeldung gilt generell für die Herstellung von Amiden, jedoch dabei insbesondere für solche Amide höherer Fettsäuren oder für die Verwendung von Abkömmlingen der verschiedenen Fettsäuren, besonders auch für die einfach und mehrfach ungesättigten Fettsäuren, Sulfamidocarbonsäuren, Oxäthanethercarbonsäuren, Sarkosinate, etc.

Nicht nur die langkettigen und mit sterisch hindernden Gruppierungen versehenen Säuren verhindern oft die einfache Umsetzung gemäß Gleichung (1), wobei X = OH ist, sondern dies gilt in gleicher Weise auch für ähnlich strukturierte Amine. Deshalb gilt für all diese Fälle die Regel, daß die Azylierung über die Azylhalogenide zu bewerkstelligen ist.

Dieser Weg ergibt zwar hinsichtlich der angestrebten Produkte, nämlich der Amide, gute Resultate. Hinsichtlich der Gefahren der Umsetzung der Nebenprodukte und der Umweltbelastung ist dieser Weg jedoch der schlechteste. Verfolgt man einmal den langen Weg über die zur Chlorierung benötigten Säurechloride, so kommt man, was Energieaufwand und Umweltbelastung durch Vorprodukte angeht, zu folgender Charakterisierung.

Die verwendeten Ausgangs- und Zwischenprodukte sind hochgiftig und umweltbelastend, erfordern hohen Energieaufwand zur Herstellung und müssen in der Regel in mehreren Stufen hergestellt werden.

1. Chlorgewinnung:

Energieintensiv, umweltbelastend,da zur höchsten Gefahren- und Toxiditätsklasse gehörend und mit gefährlichen, auch Quecksilber enthaltenden Nebenprodukten, versehen.

2. Phosphorgewinnung

Energieintensiv, umweltbelastend, ebenfalls von höchster Toxiditäts- und Gefahrenklasse.

3. Phosphor und Schwefelchloride:

Ebenfalls von höchster Toxiditäts- und Gefahrenklasse.

4. Organische Säurechloride:

.Gleichfalls umweltbelastend, von hoher Toxiditäts- und Gefahrenklasse.

5. Auch die Umsetzung des Säurechlorids mit dem Amin ist aufgrund der Chlorwasserstoffbildung nur mit Werkstoffen höchster Resistenz durchzuführen, wobei Nebenprodukte hoher Umweltbelastung gebildet werden.

Demgegenüber ist der als Reaktionsmedium bzw. Lösungsmittel, verwendete rezyklisierbare Borsäureester auf einfache und umweltfreundliche Art zu gewinnen.

Die Borsäure wirkt weder ätzend noch ist sie äußerlich auf den Menschen einwirkend stark toxisch. Sie ist nicht brennbar und nicht auslaufend. Die Borsäure wird auch in größeren Portionen (50 kg Säcken) in der niedrigsten Gefahrenklasse gehandhabt.

Die Borsäureesterbildung erfordert keine besonderen Vorkehrungen bezüglich der verwendeten Werkstoffe. Die Ester selbst können zwar auf den Menschen toxisch wirken, jedoch befinden sie sich bei der Herstellung stets in geschlossenen Systemen. Bei den hier verwendeten beschriebenen und beanspruchten Estern werden überwiegend Alkohole mit Siedepunkten über 200°C Verwendung finden. Der Dampfdruck der Ester ist daher bei normaler Temperatur sehr gering:-und sie lassen sich als zähe glasartige Massen vergleichsweise gefahrlos handhaben.

Von großer Wichtigkeit ist jedoch, daß die Umsetzung der Borsäure mit dem betreffenden hochsiedenden Alkohol, Glykol oder dergleichen, als einziges Reaktionsprodukt neben dem Borsäureester, Wasser ergibt und umgekehrt der Borsäureester durch Wasser wieder in ihre gefahrlosen Ausgangsprodukte gespalten werden.

Die Umsetzung zum Borsäureester verläuft schnell und quantitativ, wobei nach den hier beschriebenen Wegen die Bildung mit hoher negativer Wärmetönung verläuft. Diese hier investierte Energie kann jedoch bei guter Isolation der gesamten Anlage zu einem hohen Prozentsatz wiedergewonnen werden, da die Abkühlung nach dem äußerst kurzfristigen Erreichen des hohen Energieniveaus, bei dem die Amidbildung erfolgt, außerordentlich rasch erfolgen soll, was man im technischen Prozess dadurch erreicht, daß man Borsäureester selbst zur Kühlung verwendet, diesen damit selbst wieder aufheizt, und dadurch die Energieverluste gering hält.

Die eigentliche Amidbildung, geschieht nach folgenden Kriterien:

Es können entweder die Säure allein und das Amin allein gleichzeitig oder auch im Wechsel zugegeben werden, es können aber auch die Säure und das Amin gemeinsam im stöchiometrischen Verhältnis (also in dem der Salzbildung) oder auch im Überschuß des einen über dem anderen zugegeben werden. Die Säure und/oder das Amin können auch in Form ihrer Ester oder Salze mit anorganischen Säuren oder Basen gemeinsam oder getrennt zugegeben werden. Als Ergebnis erhält man, wie aus den Beispielen ersichtlich, immer das Amid der betreffenden Säure mit dem betreffenden Amin.

Die Abtrennung des erhaltenen Amids von dem als Reaktionsmedium dienenden Borsäureester kann nach dem Abkühlen des Reaktionsgemisches durch die gebräuchlichen physikalischen Trennvorgänge, wie Dekantieren, Extrahieren, Destillieren, Filtrieren etc. vorgenommen werden.

Eine besonders geeignete Abtrennmethode besteht in der reversiblen Spaltung des Reaktionsmediums.

Die Borsäureester, die für die meisten Amide ein hohes Lösungsvermögen haben, werden nämlich durch die Zugabe von Wasser in Borsäure und den betreffenden Alkohol gespalten,wodurch das Amid nunmehr ausfällt und leicht und quantitativ abgezogen bzw. abgetrennt werden kann. Das Gemisch aus Borsäure, Wasser und Alkohol wird anschließend wieder erwärmt, das Wasser abdestilliert und dadurch der Ester wieder zurückgebildet. Man kann diesen dann erneut in den Prozeß zurückführen und wiederverwenden.

Es wurde nun überraschenderweise gefunden, daß beim Zufügen der Reaktionskomponenten zur Amidbildung zu dem vorher alleine auf ein um 100°C höher liegendes thermisches Energieniveau gebrachtem Borsäureester ein katalytisch für die Amidbildung wirkender Prozeß eintritt, der es gestattet diesen teilweise in wenigen Minuten abzuschließen. Sorgt man noch dafür,daß das Stoffgemisch nunmehr gemeinsam und schnell abgekühlt wird, so lassen sich Amidbildungsreaktionen durchführen, die sonst beim normalen Aufheizen der Reaktionspartner nicht oder nur nach Stunden unter Bildung vieler unerwünschter Nebenreaktionen möglich wären.

Dadurch bietet die vorliegende Erfindung die Vorteile energietechnisch günstiger, umwelttechnisch entlastender (nur Wasser als Reaktionsprodukt) und wirtschaftlich günstiger zu arbeiten.

Würde man beispielsweise versuchen, wie in Publikationen jüngeren Datums beschrieben, die Borsäureester des Diäthanolamin gemeinsam mit überschüssigem Diäthanolamin und Fettsäurezugabe umzusetzen, so erhält man netzende und emulgierende Stoffe, nachdem man die Fettsäure alleine zugesetzt hat. Die dafür benötigten langen Reaktionszeiten, werden bei Temperaturen von >200°C von dem Reaktionsgemisch mit einer Polykondensation beantwortet die bei überschreiten dieser Temperatur so schnell verläuft, daß unter heftiger Wasserabspaltung übel riechende Harze und Crack-Produkte entstehen.

Die DE-OS 1 620 447 betrifft die Verwendung von Piperazinderivaten als Korrosionsschutzmittel, Kühlmittel, Schmiermittel oder Schneidmittel, wobei Borsäure beispielsweise mit Diäthanolamin umgesetzt, erhitzt und anschließend partiell wieder abgekühlt wird, wonach eine Fettsäure von höherem Temperaturniveau zugegeben wird.

Die DE-OS 1 928 380 betrifft Borsäurekondensationsprodukte, hergestellt durch Umsetzen von Alkoholaminen mit Borsäuren und Zugabe von Fettsäure ohne Beachtung spezieller Temperaturniveaus.

Es lassen sich die Borsäureester oder höhere Alkohole und Aminoalkohole für sich alleine ohne weiteres auf Temperaturen von 200°C und mehr bringen ohne daß eine weitere Reaktion eintritt. Fügt man zu diesem auf einem hohen Temperaturniveau befindlichen Reaktionsmedium die Amidbildungspartner

gemeinsam oder getrennt zu mit einer Temperatur, die um 100 °C tiefer liegt, so tritt nunmehr die bisher nicht beobachtete außerordentlich schnell verlaufende und nur als katalytisch zu bezeichnende Reaktion ein, die oft schon innerhalb weniger Minuten zum Ziel führt.

Wie aus dem Beispiel 15 hervorgeht, lassen sich so auch außerordentlich langkettige und empfindliche Amine von Oleylamin mit langkettigen Carbonsäuren (Ölsäure) zum Amid umsetzen. Die Reaktion verläuft praktisch quantitativ ohne daß Crackreaktionen das Produkt geruchsmäßig oder optisch beeinflussen.

Nach der Reaktion wird das Reaktionsgemisch so rasch wie möglich aus der Hochtemperaturzone entfernt.

Das erfindungsgemäße Verfahren wird im folgenden anhand von Ausführungsbeispielen, die bevorzugte Ausführungsformen darstellen, weiterhin erläutert.

Beispiel 1

Darstellung des Diethanolaminborsäureesters

In einem 2 l Dreihalsrundkolben mit Rührer, Thermofühler und Destillationsbrücke waren jeweils 315 g Diethanolamin (≙3 Mol) und 123,6 g Borsäure (≙2 Mol) vorgelegt und auf 250 °C erhitzt worden. Dabei konnten 80-90% der theoretischen Menge Reaktionswasser, welche bei der Esterbildung freigesetzt wird; überdestilliert werden. Zu diesem Alkylolaminborsäureester wurden dann die Seifen bzw. Salze des Diethanolamins der nachfolgend in den Beispielen aufgeführten Säuren in relativ kurzer Zeit in einem Temperaturbereich >230 °C zugegeben.

Beispiel 2

Bildung des Amids des Oleylsarkosids[MG 335]mit Diethanolamin

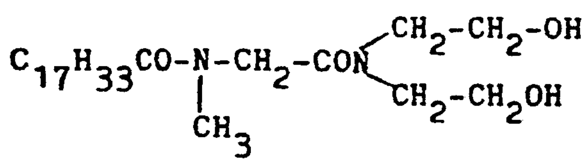

Zum gebildeten Diethanolaminborsäureester wurden bei 250 °C innerhalb von 12 Minuten
184 g Oleoylsakosid (≙0,55 Mol) gemischt mit
80 g Diethanolamin (≙0,75 Mol)
die gemeinsam auf 100 °C erhitzt werden, zulaufen lassen. Da die Reaktionsmischung während der Zugabe sehr stark schäumt, wurden einige Tropfen Siliconentschäumer zugesetzt. Nach 10 Minuten ist die Reaktion beendet und das Reaktionsgemisch wird über einen Ausguß am Kolben in ein gekühltes Metallgefäß überführt und dabei schnell auf 180 °C abgekühlt.

Reaktionsprodukt: fest, nicht klebrig, von goldgelber Farbe.

Das gebildete Amid wird durch die Dünnschichtchromatographie (=DC) identifiziert. Die Ausbeute ist über 60%.

Beispiel 3

Diäthanolamid der Benzoesäure

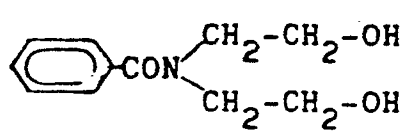

Zum in Beispiel 1 gebildeten Diethanolaminborsäureester wurden bei 250 °C in einer Zeit von 8 Minuten

67,1 g Benzoesäure (≙0,55 Mol) gemischt mit
80 g Diethanolamin (≙0,75 Mol)
zulaufen lassen. Temperatur der Salzmischung 80-90° C. 2 Minuten nach Ende der Zugabe ist die Amidbildungsreaktion beendet, und das Reaktionsgemisch wird über einen Ausfluß um den am Kolben schnell in ein mit Wasser gekühltes Metallgefäß überführt und dabei schnell auf 180° C abgekühlt.

Reaktionsprodukt: glasartig fest, klebrig, von goldgelber Farbe

Das gebildete Amid wird durch DC identifiziert. Die Ausbeute liegt oberhalb von 80%.

Beispiel 4

Diäthanolamid einer Arylsulfonamidocarbonsäure

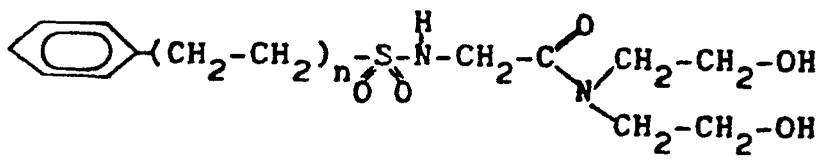

[MG ~ 311]

Zum nach Beispiel 1 gebildeten Diethanolaminborsäureester wurden bei 250° C in einer Zeit von 8 Minuten das Salz von
171 g Arylsolfonamidocarbonsäure (≙0,55 Mol) mit
80 g Diethanolamin (≙0,75 Mol) bei 90° C zulaufen lassen.
2 Minuten nach Ende der Zugabe ist die Amidbildung beendet und das Reaktionsgemisch wird -wie in Beispiel 2 und 3 beschrieben- schnell auf 180° C abgekühlt.

Reaktionsprodukt: fest, von goldgelber Farbe.

Das gebildete Amid wird durch DC identifiziert (keine Carbonsäure mehr erkennbar). Die Ausbeute liegt oberhalb 95%.

Beispiel 5

Diäthanolamid der Linolensäure

Linolensäure [MG 278,41]

Zum nach Beispiel 1 gebildeten Diethanolaminborsäureester wurden bei 250° C in einer Zeit von 10 Minuten das Salz von
153,1 g Linolensäure (≙0,55 Mol) mit
80 g diethanolamin (≙0,75 Mol)
zulaufen lassen. Temperatur der Salzmischung betrug 80/90° C. Nach insgesamt 12 Minuten ist die Reaktion beendet und wird -wie in Beispiel 2 und 3 beschrieben- schnell auf 180° C abgekühlt.

Reaktionsprodukt: hoch viskose, klebrig, von goldgelber Farbe

Das gebildete Amid wird extrahiert und durch DC identifiziert. Die Ausbeute liegt oberhalb 80%.

Beispiel 6

Diäthanolamid der Laurinsäure

Laurinsäure (MG 200.3 l]

Zum gebildeten Diethanolaminborsäureester wurden bei 250° C in 10 Minuten das Salz von
110,2 g Laurinsäure (≙0,55 Mol) mit
80 g Diethanolamin (≙0,75 Mol)
zulaufen lassen. Temperatur der Salzmischung 80-90° C. Nach insgesamt 12 Minuten ist die Reaktion

beendet und das Reaktionsgemisch wird -wie in Beispiel 2 und 3 beschrieben-auf 180 ° C abgekühlt.

Reaktionsprodukt: fest, gering klebrig, goldgelbe Farbe.

Das gebildete Amid wird extrahiert und durch DC identifiziert.

Beispiel 7

Diäthanolamid einer Alkylphenolpolyglykolethercarbonsäure

R– 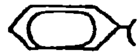 $(OCH_2CH_2)_4-OCH_2COOH$ [MG 375]

R = Tertiäres Butyl

Zum gebildeten Diethanolamincarbonsäureester wurden bei 250 ° C in einer Zeit von 15 Minuten
187,5 g Ethercarbonsäure (≙0,5 Mol) gemischt mit
52,5 g Diethanolamin (≙0,5 Mol)
zulaufen lassen. Temperatur der Salzmischung 40-50 ° C. Nach insgesamt 17 Minuten war das Reaktionsprodukt abgelassen worden. Abdestillierte Reaktionswassermenge 58,4 g

Reaktionsprodukt: glasartig, fest, von goldgelber Farbe.

Das gebildete Amid wurde extrahiert und durch DC identifiziert. Die Ausbeute liegt oberhalb 60%.

Beispiel 8

Amid eines Amins mit primärem und tertiärem C-Atom und Mischölfettsäure

1-Diethylamino-4-aminopentan [MG 158,3]

Zum gebildeten Diethanolaminoborsäureester wurden bei 250 ° C in 10 Minuten
79 g 1-Diethylamino-4-aminopentan (MG 158,3] ( 0,5 Mol) gemischt mit
150 g Mischölfettsäure ( 0,5 Mol)
zulaufen lassen. Temperatur des Aminsalzes 70-80 ° C. Temperaturabfall während der Zugabe auf 235 ° C. Nach 12 Minuten ist die Reaktion beendet und das Reaktionsgemisch wird, wie mehrfach beschrieben, auf 180 ° C abgekühlt.

Reaktionsprodukt: fest, von goldgelber Farbe.

Das gebildete Amid wurde extrahiert und durch DC identifiziert. Die Ausbeute betrug über 60%.

Beispiel 9

Amid eines primären Amins (verzweigt)

Mono-2-ethylhexylamin (MG 129,2]

Zum gebildeten Diethanolaminborsäureester wurden bei 250 ° C in 20 Minuten
64,6 g Mono-2-ethylhexylamin (≙0,5 Mol) gemischt mit
150 g Mischölfettsäure (≙0,5 Mol)
zulaufen lassen. Temperatur des Aminsalzes 60-70 ° C. Nach insgesamt 25 Minuten ist die Reaktion beendet und es werden 500 g kaltes Mineralöl zugegeben und das Gemisch dadurch auf 200 ° C abgekühlt. Das Amid löst sich im Mineralöl und trennt sich vom Ester, wird abgezogen und durch DC identifiziert. Die Ausbeute betrug 60%

Beispiel 10

Amid eines primären Amins (unverzweigt) mit Mischölfettsäuren

Tridecylamin (MG 199,4]

Zum gebildeten Diethanolaminborsäureester wurden bei 250 ° C innerhalb von 20 Minuten

99,7 g Tridecylamin (≙0,5 Mol) gemischt mit
150 g Mischölfettsäure
zulaufen lassen. Temperatur des Aminsalzes 60-70 °C. Nach insgesamt 25 Minuten Reaktionsdauer ist die Reaktion beendet und das Reaktionsgemisch wird auf 200 °C abgekühlt, es trennt sich dann in 2 Phasen auf, wobei die untere auskristalisiert.

Die obere Phase besteht aus dem fast reinen Amid und wurde durch DC identifiziert. Die Ausbeute lag oberhalb 60%.

Beispiel 11

Amid des Diäthanolamins mit Mischölfettsäure

Zum gebildeten Diethanolaminborsäureester wurden bei 250 °C in einer Zeit von 18 Minuten
105 g Diethanolamin (≙1 Mol) gemischt mit
300 g Fettsäure (≙1 Mol)
zulaufen lassen. Temperatur des Aminsalzes 100-120 °C. Nach insgesamt 20 Minuten war die Reaktion beendet und das Reaktionsgemisch wie beschrieben schnell auf 200 °C abgekühlt.

Reaktionsprodukt: hochviskose,fest, schwach klebrig, von goldgelber Farbe

Das gebildete Amid wurde extrahiert und durch DC identifiziert. Die Ausbeute lag oberhalb 80%.

Beispiel 12

Amid eines sekundären Amins (cyclisch)

Morpholin [MG 87,1] mit Ölsäure

Zum gebildeten Diethanolaminborsäureester wurden bei 250 °C in 15 Minuten
43,6 g Morpholin (≙0,5 Mol) gemischt mit
141,2 g-Ölsäure (≙0,5 Mol)
zulaufen lassen. Temperatur des Aminsalzes 30-40 °C. Nach insgesamt 20 Minuten ist die Reaktion beendet und das Reaktionsgemisch wird, wie beschrieben, schnell auf 200 °C abgekühlt.

Das gebildete Amid wurde extrahiert und durch DC identifiziert. Die Ausbeute betrug etwa 40%.

Umsetzung ausgeführt in Triglykolborsäureester

Beispiel 13

Darstellung des Triglykolborsäureesters:

In einem 2 l Dreihalsrundkolben mit Rührer, Thermofühler und Destillationsbrücke waren jeweils
226,1 g Triglykol (≙1,5 Mol) und
61,8 g Borsäure (≙1 Mol)
vorgelegt und auf 250 °C erhitzt worden. Dabei destillierte durchschnittlich zwischen 30 und 35 g Reaktionswasser ab. In diesem Borsäureester wurden dann folgende Amine als Salze der Ölsäure umgesetzt.

Beispiel 14

Amid des Tridecylamins mit Ölsäure

Zum gebildeten Triglykolborsäureester wurde bei 250 °C in 13 Minuten ein Gemisch aus
49,7 g Tridecylamin (≙0,25 Mol) und
70,6 g Ölsäure
zulaufen lassen. Temperatur des Aminsalzes 30-40 °C. Nach insgesamt 16 Minuten ist die Reaktion beendet und das Reaktionsgemisch wird schnell auf 200 °C abgekühlt.

Es bilden sich 2 Phasen, deren obere das fast reine Amid enthält. Das gebildete Amid wurde extrahiert und durch DC identifiziert. Die Ausbeute betrug etwa 60%.

Beispiel 15

Amid des Oleylamins [MG 267,5] mit Ölsäure

Zum gebildeten Triglykolborsäureester wurde bei 250 °C ein Gemisch von
66,9 g Oleylamin (≙25 Mol) zu
70,6 g Ölsäure (≙25 Mol)
in 13 Minuten zulaufen lassen. Temperatur des Aminsalzes 30-40 °C. Nach insgesamt 23 Minuten ist die Reaktion beendet und das Reaktionsgemisch wird schnell auf 180 °C abgekühlt.

Reaktionsprodukt: von bräunlicher Farbe, trennt sich in zwei Phasen, von denen die obere das fast reine Amid enthält.

Dieses wurde durch DC identifiziert. Die Ausbeute betrug 95%.

Beispiel 16

Amid des Diethanolamins mit Ölsäure

Zum gebildeten Triglykolborsäureester wurden bei 250 °C in 15 Minuten ein Gemisch aus
70,6 g Ölsäure (≙0,25 Mol) und
26,3 g Diethanolamin (≙0,25 Mol)
zulaufen lassen. Temperatur des Aminsalzes 120-130 °C. Nach insgesamt 17 Minuten ist die Reaktion beendet und das Reaktionsgemisch wird schnell auf 180 °C abgekühlt.

Reaktionsprodukt: goldgelbe Farbe, schwach trüb, flüssig.

Das gebildete Amid wurde extrahiert und durch DC identifiziert. Die Ausbeute lag oberhalb 60%.

Umsetzung ausgeführt in Hexandiolborsäureester

Beispiel 17

Entsprechend den vorhergehend beschriebenen Darstellungen der Borsäureester wurde auch 2,3-Dimethyl-2,3-butandiol [MG 118,18] zum entsprechenden Borsäureester umgesetzt. Dabei wurden
177,3 g HexaNDIOL (≙1,5 Mol) mit
61,8 g Borsäure (≙1 Mol)
verestert und 56,4 g Wasser als Destillat aufgefangen.

Zu diesem Borsäureester wurde dann bei 240/250 °C das Diethanolamin der Ölsäure bei 120-130 °C in 7 Minuten zugegeben und weiter 2 Minuten nachreagieren lassen.

Reaktionsprodukt: von goldgelber Farbe, flüssig, klar.

Das gebildete Amid wurde extrahiert und durch DC identifiziert. Die Ausbeute lag oberhalb 80%.

Umsetzung ausgeführt in Triethanolaminborsäureester

Beispiel 18

Zur Darstellung des Triethanolaminborsäureesters waren
298 g Triethanolamin (≙2 Mol) und
61,8g Borsäure (≙1 Mol)
auf 250 °C erhitzt worden. Es wurden 53 g Wasser als Destillat aufgefangen. In diesem Borsäureester wurden dann folgende Amine als Salz einer Mischölfettsäure umgesetzt.

Beispiel 19

Amid des Diethanolamins mit Mischölfettsäure

Zum gebildeten Borsäureester (Beispiel 18) waren bei 250 °C in 15 Minuten
52,5 g Diethanolamin (≙0,5 Mol) und
150 g Mischölfettsäure (≙0,5 Mol) von
130/140 °C getrennt, aber gleichzeitig in einem konstanten Strom zugegeben worden. Nach insgesamt 17 Minuten ist die Reaktion beendet und das Reaktionsgemisch wird schnell auf 200 °C abgekühlt.

Reaktionsprodukt: kristallisiert vollständig in Nadeln aus, ockerfarben.

Das Amid wird extrahiert und durch DC identifiziert.

Beispiel 20

Amid des Tridecylamins mit Mischölfettsäure

Zum gebildeten Borsäureester (Beispiel 18) wurden bei 250 °C in 15 Minuten
99,5 g Tridecylamin (≙0,5 Mol) und
150 g Mischölfettsäure (≙0,5 Mol) von 60-70 °C
getrennt aber gleichzeitig in einem konstanten Strom zugegeben. Nach insgesamt 17 Minuten ist die Reaktion beendet und das Reaktionsgemisch wird schnell auf 180 °C abgekühlt.

Reaktionsprodukt: kristallisiert zum Teil aus; die ölige Phase scheidet sich oben ab.

Sie wird extrahiert und durch DC als das Amid identifiziert. Die Ausbeute betrug etwa 60%.

Die erfindungsgemäßen Amide stellen beispielsweise wertvolle Zwischenprodukte zur Herstellung von Textilhilfsmitteln dar.

## Patentansprüche

**1.** Katalytisches Verfahren zur Herstellung von Amiden unter Verwendung an sich bekannter Ausgangssubstanzen,
dadurch gekennzeichnet,
daß Borsäureester als Reaktionsmedium und / oder als Energieüberträger und als Katalysator dient und daß
a) das katalytisch wirkende und als thermischer Energieüberträger dienende Reaktionsmedium ein Borsäureester ist, der bei einer Temperatur von mindestens 150 °C thermostabil ist,
b) dieser Borsäureester für sich allein vor dem Einbringen der Reaktionspartner für die Amidbildung auf ein höheres thermisches Energieniveau gebracht wird als die Reaktionspartner für die Amidbildung, wobei das thermische Energieniveau des Borsäureesters mindestens 200 °C beträgt, und wobei der Borsäureester für sich allein vor dem Einbringen der Reaktionspartner für die Amidbildung auf ein um 100 °C höheres thermisches Energieniveau gebracht wird als die Reaktionspartner für die Amidbildung, und
c) nach der katalytischen Reaktion das Reaktionsprodukt schnell von dem hohen thermischen Energieniveau auf ein tiefer liegendes Niveau gebracht wird.

**2.** Katalytisches Verfahren nach Anspruch 1,
dadurch gekennzeichnet,
daß der Borsäureester bei einer Temperatur von mindestens 190 °C thermostabil ist.

**3.** Katalytisches Verfahren nach mindestens einem der vorhergehenden Ansprüche,
dadurch gekennzeichnet,
daß nach der katalytischen Reaktion das Reaktionsprodukt schnell von dem hohen thermischen Energieniveau auf ein um 20 °C tiefer liegendes Niveau gebracht wird.

**4.** Katalytisches Verfahren nach mindestens einem der vorgehenden Ansprüche,
dadurch gekennzeichnet,
daß die Reaktionspartner der Stufe b) für die Amidbildung Säuren oder Säurederivate und primäre oder sekundäre Amine oder Aminderivate sind.

**5.** Katalytisches Verfahren nach mindestens einem der vorhergehenden Ansprüche,
dadurch gekennzeichnet,
daß die Reaktionspartner der Stufe b) gemeinsam oder getrennt in beliebiger Reihenfolge und / oder portionsweise alternierend zum Reaktionsmedium zugegeben werden.

**6.** Katalytisches Verfahren nach mindestens einem der vorhergehenden Ansprüche,
dadurch gekennzeichnet,
daß die Reaktionspartner der Stufe b) vor Zugabe zum Reaktionsmedium vorerwärmt werden.

**7.** Katalytisches Verfahren nach mindestens einem der vorhergehenden Ansprüche,
dadurch gekennzeichnet,
daß die Reaktionspartner der Stufe b) im stöchiometrischen Überschuß einer der verwendeten Komonenten eingesetzt werden.

## Claims

1. Catalytic process for the preparation of amides from conventional starting materials, characterized in that boric acid ester is used as the reaction medium and/or energy transfer agent and catalyst, and in that
   a) the reaction medium acting as a catalyst and used as a thermal energy transfer agent is a boric acid ester that is thermally stable at a temperature of at least 150° C,
   b) before the introduction of the reactants for the amide formation, this boric acid ester is brought, by itself, to a thermal energy level that is higher than that of the reactants for the amide formation, the thermal energy level of the boric acid ester being at least 200° C, and the boric acid ester being brought by itself, before the introduction of the reaction partners for the amide formation, to a thermal energy level that is 100 deg C higher that that of the reactants for the amide formation, and
   c) after the catalytic reaction, the reaction product is quickly brought down from the high thermal energy level to a lower level.

2. Catalytic process as in claim 1, characterized in that the boric acid ester is thermally stable at a temperature of at least 190° C.

3. Catalytic process as claimed in at least one of the previous claims, characterized in that, after the catalytic reaction, the reaction product is quickly brought down from the high thermal energy level to one that is 20 deg C lower.

4. Catalytic process as claimed in at least one of the previous claims, characterized in that the reactants involved in stage b) of the amide formation are acids or acid derivatives and primary or secondary amines or amine derivatives.

5. Catalytic process as claimed in at least one of the previous claims, characterized in that the reactants involved in stage b) are added to the reaction medium together or separately in any order and/or alternatively in portions.

6. Catalytic process as claimed in at least one of the previous claims, characterized in that the reactants involved in stage b) are pre-heated before being added to the reaction medium.

7. Catalytic process as claimed in at least one of the previous claims, characterized in that one of the reactants involved in stage b) is used in a stoichiometric excess of one of the components employed.

## Revendications

1. Procédé catalytique pour préparer des amides en utilisant des substances de départ connues en soi, caractérisé en ce qu'un ester de l'acide borique sert de milieu réactionnel et/ou de transporteur d'énergie et de catalyseur, et que
   a) le milieu réactionnel à action catalytique et servant de transporteur d'énergie thermique est un ester de l'acide borique qui est thermostable à une température d'au moins 150° C,
   b) avant l'introduction des partenaires réactionnels pour la formation d'amides, cet ester de l'acide borique est amené, seul, à un niveau d'énergie thermique plus élevé que les partenaires réactionnels pour la formation d'amides, le niveau d'énergie thermique de l'ester de l'acide borique étant d'au moins 200° C, et l'ester de l'acide borique étant amené, seul, à un niveau d'énergie thermique supérieur de 100° C à celui des partenaires réactionnels pour la formation d'amides, avant l'introduction desdits partenaires réactionnels pour la formation d'amides, et
   c) après la réaction catalytique, le produit réactionnel est rapidement ramené du niveau d'énergie thermique élevé à un niveau plus bas.

2. Procédé catalytique selon la revendication 1, caractérisé en ce que l'ester de l'acide borique est thermostable à une température d'au moins 190° C.

3. Procédé catalytique selon au moins l'une des revendications précédentes, caractérisé en ce que le

produit réactionnel est rapidement ramené du niveau d'énergie thermique élevé à un niveau inférieur de 20 °C, après la réaction catalytique.

4. Procédé catalytique selon au moins l'une des revendications précédentes, caractérisé en ce que les partenaires réactionnels de l'étape b) pour la formation d'amides sont des acides ou des dérivés d'acides et des amines primaires ou secondaires ou des dérivés d'amines.

5. Procédé catalytique selon au moins l'une des revendications précédentes, caractérisé en ce que les partenaires réactionnels de l'étape b) sont ajoutés au milieu réactionnel ensemble ou séparément, dans un ordre quelconque et/ou par portions alternées.

6. Procédé catalytique selon au moins l'une des revendications précédentes, caractérisé en ce que les partenaires réactionnels de l'étape b) sont préalablement chauffés avant d'être ajoutés au milieu réactionnel.

7. Procédé catalytique selon au moins l'une des revendications précédentes, caractérisé en ce que les partenaires réactionnels de l'étape b) sont mis en oeuvre avec un excès stoechiométrique d'un des composants utilisés.